# EUROPEAN PATENT APPLICATION

(11) **EP 2 034 649 A1**
(43) Date of publication of application: **11.03.2009**
(21) Application number: 07017667.2
(22) Date of filing: 10.09.2007
(51) Int. Cl.: H04L 1/00

(54) **Method for high speed uplink packet access for wireless data transmission**

(71) Applicant: Nokia Corporation, 02150 Espoo (FI)
(72) Inventor: The designation of the inventor has not yet been filed
(74) Representative: Bruglachner, Thomas E.

(57) **Abstract**

The invention relates to a method for high speed uplink packet access for wireless data transmission from a user equipment unit (UE) to a base station (BS) in a mobile radio network system, wherein an enhanced dedicated channel (E-DCH) is used for uplink data transmission, the method comprising the step of selecting the transmission format (WCDMA,SCCP) for the wireless data transmission out of at least two possible transmission formats (WCDMA,SCCP) at least depending on which transmission format (WCDMA,SCCP) is supported by the user equipment unit (UE).

## Description

### 1. Technical Field of the Invention

The invention relates to a method for high speed uplink packet access for wireless data transmission according to the preamble of claim 1, to a user equipment unit according to claim 18 and to a base station for using a mobile radio network system according to the preamble of claim 20.

### 2. Technical Field of the Invention

The invention relates to a method and devices for high speed uplink packet access (HSUPA). In HSUPA, user equipment units may be provided with an enhanced dedicated channel (E-DCH) for transmitting data from the user equipment unit to a base station in a mobile radio network system. The enhanced dedicated channel and its properties are described e.g. in the 3GPP specification TS 25.319 version 7.2.0 release 7. The latter specification is included herewith by reference as far as it concerns the details of the signalling relating to the enhanced dedicated channel (E-DCH). The enhanced dedicated channel may be characterized in that there is only one coded composite transport channel (CCTrCH) of the E-DCH type per user equipment unit (UE) and/or there is only one E-DCH per CCTrCH of E-DCH type. Moreover, the E-DCH transport channel typically has only one transport block per transmission time interval (TTI). If the E-DCH is of frequency division duplex (FDD) type, both 2 ms TTI and 10 ms TTI may be supported. A 5 ms TTI may be supported by a 1.28 Mcps TDD E-DCH and a 10 ms TTI may be supported by 3.84 Mcps and 7.68 Mcps TTD E-DCH.

The support of different TTI values may be mandatory for user equipment units in certain categories and switching between different TTIs can be performed by the UTRAN using L3 signalling.

The scheduling of the enhanced dedicated channel may be controlled by the base station, which may be a NodeB using control signals using control signalling in uplink and downlink. In addition, guaranteed bit rate (GBR) services for are supported through non-scheduled transmission (NST). For scheduled transmissions, the radio network system controls the maximum allowed power ratio between the E-DCH dedicated physical data channel (E-DPDCH) and the dedicated physical control channel (DPCCH). In the case of non-scheduled transmissions, the network controls the maximum number of bits that can be included in a medium access control type e protocol data unit (MAC-e PDU).

Non-scheduled transmissions are defined per MAC-d flow. For non-scheduled transmissions, a maximum number of bits that can be included in a MAC-e PDU (called non-scheduled grant) are defined by the serving radio network controller (SRNC). Logical channels mapped on a non-scheduled MAC-d flow can only transmit up to a non-scheduled grant configured for that MAC-d flow. The non-scheduled transmission is configured by the SRNC, the user equipment unit UE is allowed to send E-DCH data at any time for MAC-d flows that are configured for non-scheduled transmissions. In the non-scheduled transmission, the user equipment may transmit up to a configured number of bits with about receiving any scheduling command from the base station. Thus, signalling overhead and scheduling delay may be minimized.

For scheduled E-DCH transmission, the base station or NodeB controls the uplink resources by sending scheduled grants to the user equipment units once per TTI or slower. The user equipment units (UE) can request more resources by sending a scheduling request to the NodeB. Such a request by the UE may have the form of scheduling information and happy bit, wherein the happy bit is a dedicated bit indicating whether the grant bit rate is considered sufficient by the UE or not. The scheduling information is transmitted as a part of the MAC-e header for the logical channels for which radio resource control (RRC) is configured such that reporting needs to be made. It provides the serving base station with a better view of the amount of system resources needed by the user equipment unit UE and the amount of resources it can actually dispose of. The scheduling grants control a maximum allowed E-DPDCH/DPCCH power ratio which is also called serving grant (SG). The serving grant refers to the power ratio used in the E-DCH transport format combination (TFC) selection for the hybrid automatic retransmission request (HARQ) processes, which have not been restricted from transmitting scheduled transmissions.

There are two types of scheduling grants. Absolute grants (AG) can be sent by the serving E-DCH cell to provide an absolute imitation of the maximum amount of uplink resources the user equipment unit may use. For a 2 ms TTI, the absolute grant can activate/deactivate one or all HARQ processes which are not disabled as per L3 signalling. The treatment of the HARQ processes is coded in a value called the absolute grant scope. Absolute grants may be valid for one user equipment, for a group of user equipments or for all user equipments. Up to two identities (E-RNTIs), one primary and one secondary, using the same E-DCH channel can be allocated to a user equipment unit at a time and the UE needs to listen to both identities all the time. Primary absolute grants always affect the serving grant (SG), wherein secondary absolute grants only affect the SG, if the user equipment unit has been switched to its secondary E-RNTI. When the UE is switched to its secondary E-RNTI, the user equipment should update the serving grant to the latest received secondary absolute grant, if not the latest absolute grant that affected the SG was the secondary one.

The second type of scheduling grants is relative grants (RG). RGs can be sent by the serving and non-serving NodeBs. The relative grants received from the serving base station can increase or decrease the resource limitation compared to the previously used value on the same HARQ process or keep it unchanged. The relative grant allows the base station scheduler to incrementally adjust the serving grant of the user equipments under its control. Relative grants from the non-serving base stations can only decrease the resource limitation compared to the previously used value, if the maximum allocated uplink rate of transfer in the cell is exceeded. This allows neighbouring NodeBs to adjust the transmitted rate of user equipment units that are not under their control in order to avoid overload situations in a neighbouring cell. As absolute grants, relative grants may be valid for one user equipment unit, for a group of user equipment units or for all user equipment units.

Recently, it has been proposed to use a cyclic transmission format for maximizing throughput of packet data in WCDMA uplink. The idea is to schedule orthogonal resources to high bit rate users while unscheduled users may utilize non-orthogonal resources and non-cyclic data formats. The resources of the high bit rate users may be orthogonal in time and/or in frequency domain, while low bit rate users are spread over the whole transmission bandwidth. This would assume semi-static (RNC controlled) transmission format and/or allow only semi-static control for the maximum data rate for the low data rate users.

### 3. Summary of the Invention

One object of the invention is to enable a switching between a cyclic transmission format for WCDMA uplink and a non-cyclic transmission format as used in standard UMTS systems if both formats are supported by a user equipment unit.

According to a first aspect of the invention, a method for a high speed uplink packet access (HSUPA) for wireless data transmission from a user equipment unit (UE) to a base station (BS) in a mobile radio network system is proposed. An enhanced dedicated channel (E-DCH) is used for uplink data transmission. The method comprises the step of selecting the transmission format for the wireless data transmission out of at least two possible transmission formats at least depending on which transmission format is supported by the user equipment unit.

In order to enable a flexible switching between the transmission formats, it is proposed that the method further comprises the step of switching the transmission format from at least a first transmission format to a second transmission format depending on at least a parameter relating in particular to a bit rate of the dedicated channel. The bit rate may be an actually used bit rate or a guaranteed bit rate.

In particular, if multiple user equipment units are provided with enhanced dedicated channels according to the invention, the situation that the signals of neighbouring user equipment units interfere may occur. It may therefore be helpful to adapt the transmission format such that interferences between different signals are avoided, e.g. by using a cyclic data format being characterized by an addition of symbols cyclically continuing the symbol sequence, i.e. a cyclic prefix or postfix, wherein an additional Fourier transform may be applied before the actual modulation process, since such cyclic data formats automatically preserve the orthogonality of the signals.

According to a first embodiment of the invention, the switching of the transmission format may be controlled by the base station, wherein the base station may e.g. use an absolute or relative grant channel for transmitting a signal triggering the switching of the transmission format to the user equipment unit. By using the absolute or relative grant channel, no additional channel has to be introduced such that backward compatibility can be assured. The user equipment unit may switch the transmission format depending on either the signal to grant bit rate, wherein the user equipment unit may use a predefined mapping depending on the signal grant bit rate.

The base station may transmit a signal explicitly or implicitly representing the transmission format to be used, wherein the base station may use an absolute or relative grant channel for the enhanced dedicated channel.

According to a second embodiment of the invention, the switching of the transmission format may be controlled by the user equipment unit, wherein the user equipment unit may favourably define the transmission format using a transport format combination selection signal. Due to the extended functionality of the transport format combination (TFC) selection signal for E-DC (E-TFCI), a backward capability of the mobile radio network system may be assured.

Favourably, the transport format is determined based on an actually used data rate/bit rate. The transmission format may e.g. be selected according to a predefined mapping depending on the actually used data rate. The actually used data rate may be determined e.g. using an actually used transmission format combination (TFC).

The merits of the invention become particularly apparent, if the first transmission format is a wide band code division multiple access (WCDMA) transmission format and wherein the second transmission format is a single carrier transmission format with a cyclic prefix (SCCP). Since WCDMA transmission formats generate interference to each other, if many user equipment units camped at the same base station transmit with high power, switching to an SCCP transmission format may lead to an important gain in the signal to noise ratio as the SCCP transmission formats do not generate interference to each other. If the single carrier cyclic prefix transmission format is used, a dedicated physical control channel (E-DPCCH) relating to the enhanced dedicated channel and a dedicated physical data channel (E-DPDCH) relating to the same enhanced dedicated channel may be code multiplexed to use a simultaneously transmitted WCDMA transmission format, or time or frequency multiplexed within the SCCP transmission format.

In order to avoid problems with pending HARQ retransmissions when there is a change in transmission format, it is further proposed that the switching of the transmission format is signalled a predefined period before the switching of the transmission format is applied. The predefined period may be determined such that pending HARQ retransmissions are most probably completed before the transmission format is changed. Moreover, it is proposed that HARQ buffers are flushed when the transmission format is changed. The HARQ retransmissions may be completed in the original transmission format, if the frame timing of the first transmission format and the frame timing of the second transmission format are the same. If this is the case, any HARQ retransmission may be transmitted in the same data format as the original packet the HARQ retransmission relates to. The transmission format may switch to the old transmission format for the HARQ retransmissions only, wherein the new packets are transmitted in the new transmission format, such that a soft switching procedure is available.

According to a further aspect of the invention, a user equipment unit comprising means for implementing one of the above described methods for high speed uplink packet access for wireless data transmission is proposed. In particular, the user equipment unit may be configured to switch the transmission format from at least a first transmission format to a second transmission format depending on at least one parameter relating to a bit rate of the dedicated channel.

According to a further aspect of the invention, a base station for use in a mobile ratio network system is proposed, wherein the base station comprises means for implementing a method of the above described type. In particular, the base station may be configured to switch the transmission format from at least a first transmission format to a second transmission format depending at least on the parameter relating to a bit rate of the dedicated channel. Since the base station is the receiver of the enhanced dedicated data channel, the switching process comprises selecting e.g. an alternative decoding mechanism and/or generating a trigger signal for triggering the switching procedure in the user equipment unit.

Further characterizing features and the advantages thereof will become apparent to the skilled person from the following detailed description of embodiments of the invention. The following description refers to figures illustrating specific embodiments of the invention combining multiple characterizing features in a particular way. A skilled person will see that the general idea of the invention is not limited to the specific combination of the described embodiments of the invention and will be able to find further combinations of the characterizing features being adapted to specific application scenarios without departing from the scope of the invention as defined in the attached claims.

### 4. Brief Description of the Drawings

Fig. 1 schematically shows a first embodiment of the invention, wherein the transmission format is determined by the base station.
Fig. 2 shows a second embodiment of the invention, where the transmission format is selected by the user equipment unit.
Fig. 3 shows a flow diagram of a method for selecting the transmission format according to the first embodiment of the invention.
Fig. 4 shows a flow diagram of a method for selecting the transmission format according to the second embodiment of the invention.

### 5. Detailed Description of an Embodiment of the Invention

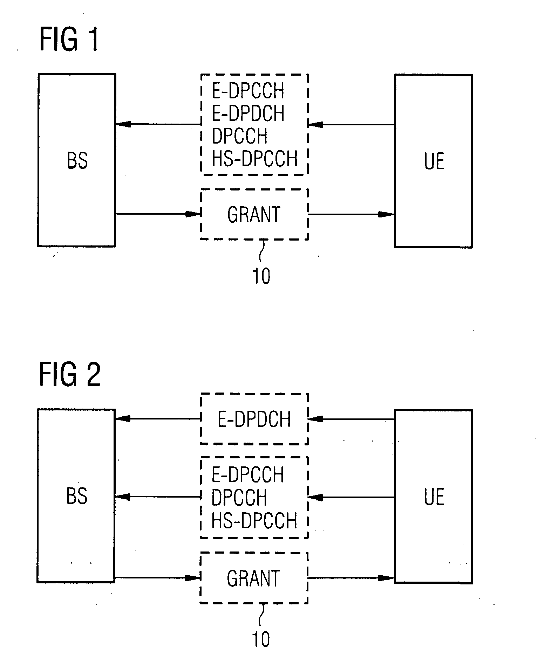

Fig. 1 illustrates a method for high speed uplink packet access for wireless data transmission from a user equipment unit (UE) to a base station (BS) in a mobile radio network system, e. g. in a Third Generation or beyond Third Generation mobile radio network system, such as UTRAN LTE and Wi-Max FDMA. The mobile radio network system is capable of providing the user equipment unit (UE) with an enhanced dedicated channel with a granted bit rate to be used for uplink data transmission from the user equipment unit (UE) to the base station (BS).

According to a first embodiment of the invention, the base station (BS) submits a grant message 10 to the user equipment unit (UE), wherein the grant message is transmitted using an absolute or relative grant channel and includes a code representing the granted bit rate of the enhanced dedicated channel and a code representing the grant type, wherein the different grant types may differ, e. g. in the way how hybrid automatic retransmission requests (HARQ) are treated. The base station, which is the base station of the NodeB type, selects the transmission format for the wireless data transmission in the enhanced dedicated channel out of at least two possible transmission formats. The transmission formats may include, e. g. a standard wide band code division multiple access (WCDMA) format and a single carrier cyclic prefix (SCCP) format. The details of the data formats and the methods for code generation are described, e. g. in the document WO 2007/091157 A2, which is included herewith by reference as far as the apparatuses, methods and computer programs capable of generating the data formats are concerned.

The base station (BS) derives from the identification number of the user equipment unit (UE), which transmission formats are supported by the user equipment unit. If the user equipment unit is capable of supporting more than one transmission format, the base station transmits a code representing the transmission format to be selected using the grant channel 10.

Moreover, if e. g. a bit rate transmitted in the enhanced dedicated channel exceeds a predetermined threshold value, or if e. g. a number of simultaneously transmitting user equipment units received by the base station increases, the base station may switch the transmission format by selecting an appropriate code in the transmitted grant message 10. Since the switching process is triggered by the grant message 10, the switching of the transmission format is controlled by the base station (BS). The grant message 10 may be an absolute or relative grant message and the user equipment unit (UE) may switch the transmission format depending on the signalled granted bit rate, e. g. using a predefined mapping or decoding.

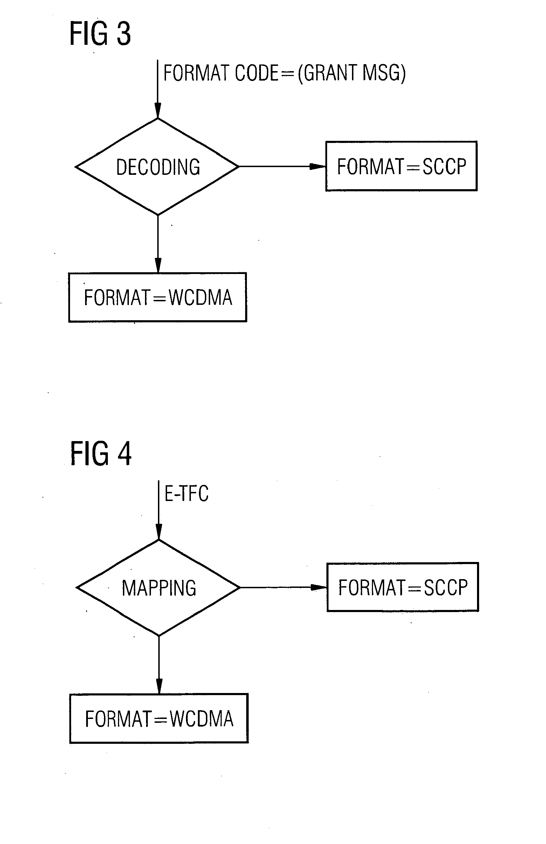

Fig. 3 schematically shows a method for selecting the transmission format to be used. The method illustrated in Fig. 3 is implemented in the user equipment unit (UE). The user equipment unit receives the grant message comprising the code representing the format. The code is decoded and either the SCCP or the WCDMA format is selected.

According to the above described embodiment, the transmission format is controlled by the base station (BS) (the NodeB), thus the BS knows beforehand the transmission format. The user equipment unit (UE) applies the signalled format for all transport format combinations of the enhanced dedicated channel (E-TFC) and data rates and modulations. The NodeB scheduling signals a grant which implicitly or explicitly indicates that the user equipment unit (UE) has to select the cyclic transmission format SCCP or the WCDMA transmission format whenever is has any data to send.

If the cyclic transmission format SCCP is applied, the enhanced dedicated physical control channel (the control channel referring to the enhanced dedicated channel), the enhanced dedicated physical data channel (E-DPDCH) and also the dedicated physical control channel (DPCCH) and the high speed dedicated physical control channel (HS-DPCCH) are time-multiplexed and thus can be transmitted using the cyclic format SCCP. However, alternatively the channels or part of the channels could be transmitted code-multiplexed as 3GPP release 7 WCDMA.

The same transmission format used for transmitting the E-DPDCH is applied for hybrid automatic retransmission request (HARQ) retransmission. When a transmission format change is signalled, the predefined guard period is started and actual switching procedure is performed at the end of the predefined period. This enables a cool-off period allowing a completion of the pending HARQ retransmissions before the transmission format is changed. Alternatively or in the case where some HARQ retransmissions are still pending at the end of the predefined period, the HARQ buffers are flushed when the transmission format is changed.

If a user equipment unit (UE) does not support the cyclic transmission format, the user equipment unit (UE) would be transmitting using the WCDMA data format while other users supporting cyclic transmission format would use the signalled transmission format as indicated in the grant message 10.

Fig. 2 shows an alternative embodiment of the invention, wherein the transmission format is dynamically changed by the user equipment unit. The applied transmission format could e. g. be coded in the applied E-TFC, wherein the E-TFC of course implicitly depends on the expected data rate to be transmitted. The transmission format selection is therefore implicitly done in the selection of the transport format combination (TFC) for the enhanced dedicated channel E-DCH. In this alternative, the base station is not aware of the transmission format beforehand. Therefore, the E-DPCCH carrying the indication of the used E-TFC (E-TFCI), the DPCCH and the HS-DPCCH have to be transmitted in the code-multiplexed WCDMA format, whereas the E-DPDCH may be transmitted either in a cyclic format SCCP or in the WCDMA format depending on the decision of the user equipment unit (UE). The grant message could contain a code signalling the user equipment unit which optional data formats are supported by the base station (BS). However, the user equipment unit (UE) may select the cyclic data transmission format SCCP or the non-cyclic format WCDMA, depending on whether it is capable of transmitting with high enough data rate, whether it has enough data to send and sufficient power headroom for transmission of high data rate available.

According to the second embodiment of the invention, the frame timing of the transmission formats SCCP and WCDMA are preferably the same.

According to the second embodiment of the invention, the same transmission format is applied for HARQ retransmission as is applied for the initial transmission. This is automatically possible since the transmission format can change from TTI to TTI, depending on the selected E-TFC.

The users which do not support cyclic transmission format will be transmitting in WCDMA channels all the time and the user supporting the cyclic transmission format SCCP are transmitting using WCDMA channels whenever the used E-TFC indicates that the WCDMA transmission format will be used.

The invention allows scheduling of the high speed uplink packet access and in addition, a new transmission format. As a consequence, the network is very flexible for transmission format selection. The lower data rate could be scheduled, and e. g. cyclic transmission format may be applied only for very high data rates. Since the transmission format is controlled by either the user equipment unit (UE) or the base station (BS), an excessive number of switching processes, as might occur at the format selection, is immediately determined by the actual data rate, which may be strongly fluctuating.

Fig. 4 illustrates the transmission format selection according to the second embodiment of the invention, wherein the method illustrated in Fig. 4 is implemented in the base station (BS). The base station applies a mapping to the received transport format combination (E-TFC) contained in the E-DPCCH data packets. The E-TFC is mapped using a predetermined mapping and the result of the mapping is a binary valued variable representing either the cyclic transmission format SCCP or the non-cyclic transmission format WCDMA. From the result of the mapping, the base station (BS) derives how the data contained in the E-DPDCH have to be decoded.

## Claims

1. Method for wireless data transmission from a user equipment unit (UE) to a base station (BS) in a mobile radio network system, wherein a dedicated channel is used for uplink data transmission, the method comprising the step of selecting the transmission format (WCDMA, SCCP) for the wireless data transmission out of at least two possible transmission formats (WCDMA, SCCP) at least depending on which transmission format (WCDMA, SCCP) is supported by the user equipment unit (UE),
**characterized in that**
said method further comprises the step of switching the transmission format (WCDMA, SCCP) from at least a first transmission format (WCDMA, SCCP) to a second transmission format (WCDMA, SCCP) depending at least on a parameter relating to the dedicated channel.

2. Method according to claim 1, **characterized in that** the switching of the transmission format (WCDMA, SCCP) is controlled by the base station (BS).

3. Method according to claim 2, **characterized in that** the base station (BS) uses an absolute or relative grant channel (10) for transmitting a signal triggering the switching of the transmission format (WCDMA, SCCP) to the user equipment unit (UE).

4. Method according to claim 3, **characterized in that** the user equipment unit (UE) switches the transmission format (WCDMA, SCCP) depending on the signalled granted bit rate.

5. Method according to one of claims 2 - 4, **characterized in that** the transmission format (WCDMA, SCCP) is selected according to a predefined mapping depending on the signalled granted bit rate.

6. Method according to at least one of claims 1 - 5, **characterized in that** the base station (BS) transmits a signal representing the transmission format (WCDMA, SCCP) to be used using an absolute or relative grant channel (10) for the enhanced dedicated channel (E-DCH).

7. Method according to claim 1, **characterized** that the switching of the transmission format (WCDMA, SCCP) is controlled by the user equipment unit (UE).

8. Method according to claim 7, **characterized in that** the user equipment unit (UE) defines the transmission format (WCDMA, SCCP) using a transport format combination selection (E-TFC).

9. Method according to claim 7, **characterized in that** the transport format is determined based on an actually used data rate.

10. Method according to one of claims 7 - 9, **characterized in that** the transmission format (WCDMA, SCCP) is selected according to a predefined mapping depending on the actually used data rate.

11. Method according to one of claims 9 and 10, **characterized in that** said actually used data rate is determined using an actually used transmission format (WCDMA, SCCP) combination.

12. Method according to one of the preceding claims, **characterized in that** the first transmission format (WCDMA, SCCP) is a wideband code division multiple access (WCDMA) transmission format (WCDMA, SCCP) and wherein the second transmission format (WCDMA, SCCP) is a single carrier cyclic prefix (SCCP) transmission format (WCDMA, SCCP).

13. Method according to claim 12, **characterized in that** a dedicated physical control channel (E-DPCCH) and a dedicated physical data channel (E-DPDCH) relating to said dedicated channel (E-DCH) are time multiplexed when the single carrier cyclic prefix (SCCP) transmission format is used.

14. Method according to at least one of the preceding claims, **characterized in that** the switching of the transmission format (WCDMA, SCCP) is signalled a predefined period before switching of the transmission format (WCDMA, SCCP) is applied, wherein the predefined period is determined such that pending HARQ retransmissions are most probably completed before the transmission format (WCDMA, SCCP) is changed.

15. Method according to at least one of the preceding claims, **characterized in that** the HARQ buffers are flushed when the transmission format (WCDMA, SCCP) is changed.

16. Method according to one of the preceding claims, **characterized in that** the frame timing of the first transmission format (WCDMA, SCCP) and of the second transmission format (WCDMA, SCCP) is the same.

17. Method according to claim 16, **characterized in that** any HARQ retransmission is transmitted in the same data format as the original packet the HARQ retransmission relates to.

18. User equipment unit (UE) **characterized by** comprising means for implementing a method for high speed uplink packet access for wireless data transmission according to one of the preceding claims.

19. User equipment unit (UE) according to claim 18, **characterized in that** the user equipment unit (UE) is configured to switch the transmission format (WCDMA, SCCP) from at least a first transmission format (WCDMA, SCCP) to a second transmission format (WCDMA, SCCP) depending at least on a parameter relating to a bit-rate of the dedicated channel (E-DCH).
